(19) Europäisches Patentamt
European Patent Office
Office européen des brevets

(11) **EP 3 507 589 B1**

(12) **EUROPÄISCHE PATENTSCHRIFT**

(45) Veröffentlichungstag und Bekanntmachung des Hinweises auf die Patenterteilung:
**20.11.2019 Patentblatt 2019/47**

(51) Int Cl.:
***G01N 21/53*** *(2006.01)*

(21) Anmeldenummer: **17776927.0**

(22) Anmeldetag: **31.08.2017**

(86) Internationale Anmeldenummer:
**PCT/DE2017/100737**

(87) Internationale Veröffentlichungsnummer:
**WO 2018/041306 (08.03.2018 Gazette 2018/10)**

(54) **VERFAHREN ZUR QUANTITATIVEN BESTIMMUNG VON EINER ZEITLICHEN UND RÄUMLICHEN VERTEILUNG VON LICHTSTRAHLEN IN EINEM STREUENDEN MEDIUM**

METHOD FOR QUANTITATIVELY DETERMINING A TEMPORAL AND SPATIAL DISTRIBUTION OF LIGHT BEAMS IN A SCATTERING MEDIUM

PROCÉDÉ DE DÉTERMINATION QUANTITATIVE D'UNE DISTRIBUTION TEMPORELLE ET SPATIALE DE FAISCEAUX LUMINEUX DANS UN MILIEU DISPERSIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.09.2016 DE 102016116346**

(43) Veröffentlichungstag der Anmeldung:
**10.07.2019 Patentblatt 2019/28**

(73) Patentinhaber: **IAV GmbH Ingenieurgesellschaft Auto und Verkehr**
**10587 Berlin (DE)**

(72) Erfinder:
• **MARUTZKY, Michael**
**38518 Gifhorn (DE)**
• **KLEINERT, Benedikt**
**38179 GroßSchwülper (DE)**
• **BOGDANOW, Sven**
**38179 Groß Schwülper (DE)**

(74) Vertreter: **Fukala, Georg**
**IAV GmbH**
**Ingenieurgesellschaft Auto und Verkehr**
**Entwicklungszentrum Chemnitz/Stollberg**
**Auer Straße 54**
**09366 Stollberg (DE)**

• **Simon Premoze ET AL: "Path Integration for Light Transport in Volumes", Eurographics Symposium on Rendering, 2003, XP055238635, DOI: 10.2312/EGWR/EGWR03/052-063 Gefunden im Internet: URL:http://citeseerx.ist.psu.edu/viewdoc/download?doi=10.1.1.75.4115&rep=rep1&type=pdf**
• **WU DI ET AL: "Decomposing Global Light Transport Using Time of Flight Imaging", INTERNATIONAL JOURNAL OF COMPUTER VISION, KLUWER ACADEMIC PUBLISHERS, NORWELL, US, Bd. 107, Nr. 2, 31. Oktober 2013 (2013-10-31), Seiten 123-138, XP035362219, ISSN: 0920-5691, DOI: 10.1007/S11263-013-0668-2 [gefunden am 2013-10-31]**
• **ISHIMARU A: "Theory and application of wave propagation and scattering in random media", PROCEEDINGS OF THE IEEE, IEEE. NEW YORK, US , Bd. 65, Nr. 7 Juli 1977 (1977-07), Seiten 1030-1061, XP002517930, ISSN: 0018-9219, DOI: 10.1109/PROC.1977.10612 Gefunden im Internet: URL:http://ieeexplore.ieee.org/xpls/abs_all.jsp?isnumber=31255&arnumber=1454881&count=50&index=4 [gefunden am 2005-06-28]**

(56) Entgegenhaltungen:
**US-B1- 6 362 773**

**(Forts. nächste Seite)**

- **NARASIMHAN S G ET AL: "Shedding light on the weather", PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, Bd. 1, 18. Juni 2003 (2003-06-18), Seiten 665-672, XP010644961, DOI: 10.1109/CVPR.2003.1211417 ISBN: 978-0-7695-1900-5**

## Beschreibung

Die Erfindung betrifft ein Verfahren zur quantitativen Bestimmung von einer zeitlichen und räumlichen Verteilung von Lichtstrahlen in einem streuenden Medium sowie ein Verfahren zur quantitativen Bestimmung der Sichtweite in einem Nebel.

## Stand der Technik

Die Notwendigkeit, die Sichtweite in streuenden Medien, wie Nebel, zu bestimmen, ist vor allem vor dem Hintergrund einer Anpassung einer Verhaltensweise eines Verkehrsteilnehmers zu Lande, zu Wasser und in der Luft hinlänglich bekannt.

Das Dokument DE 689 02 877 T2 beschreibt ein Verfahren zum Messen der Sichtweite bei Nebel. Dabei wird der Nebel durch den Koeffizienten des Energieverlustes eines Lichtstrahls pro Einheit des Abstandes ausgedrückt, wobei der Energieverlust auf das Streuungsverhalten der Tröpfchen zurückzuführen ist, was wiederum durch einen Koeffizienten der Lichtstreuung in Abhängigkeit der Teilchengröße beschrieben werden kann. Die Teilchengröße wirkt sich auf die Wahrscheinlichkeit aus, mit der die Photonen um einen bestimmten Winkel durch Streuung abgelenkt werden. Diese Streuungswahrscheinlichkeit kann als Phasenfunktion der Tröpfchen bezeichnet werden. Bei einer gegebenen Wellenlänge des Lichtes und einer definierten Tröpfchengröße ist es nach der Mie'schen Theorie möglich, diese Phasenfunktion zu berechnen. Wird für jede einzelne Phasenfunktion (für verschiedene bekannte Nebelarten) für verschiedene Wellenlängen des ausgesendeten Lichtes eine Rückstreukurve in Abhängigkeit des Rückstreuwinkels abgetragen, lässt sich eine "Tendenz zum Ineinanderfließen" der verschiedenen Kurven bei einem begrenzten Winkelbereich erkennen. Durch die Erfassung des rückgestreuten Lichtes unter diesem Rückstreuwinkel ist eine Aussage über die Sichtweite innerhalb des Nebels möglich. Die Sichtweite innerhalb eines Nebels ist allerdings nicht nur abhängig von der Tröpfchengröße sondern auch von der Nebeldichte. Darüber hinaus ist das "Ineinanderfließen" der Rückstreukurven nur ein grober Anhaltspunkt und nicht für alle Nebelarten gleich aussagekräftig. Schließlich sind die Phasenfunktionen nur unter relativ großem Aufwand zu bestimmen, da ein realer Nebel erzeugt und vermessen werden muss.

In der Offenlegungsschrift DE 103 03 046 A1 werden ein Verfahren und eine Vorrichtung zur quantitativen Abschätzung der Sichtweite in Fahrzeugen vorgeschlagen. Dabei wird eine charakteristische Maßzahl, ermittelt durch eine Auswertung eines erfassten Bildes, in Bezug zu Referenzwerten gesetzt. Als charakteristische Maßzahl haben sich Maßzahlen bewährt, die die Schärfe, den Kontrast oder die Intensität des rückgestreuten Lichtes repräsentieren. Dabei liegt der Erfindung die Erkenntnis zugrunde, dass mit geringerer Sichtweite mehr Licht reflektiert und damit die Intensität des Rückstreusignals vergrößert wird. Als Maßzahl für die Intensitätsverteilung hat sich bei einer Histogramm-Darstellung eine normierte Breite der Histogrammkurve (z. B. Halbwertsbreite) bewährt. Nun kann die Bestimmung der Sichtweite nur so genau sein, wie die Genauigkeit der Referenzwerte, die den korrelierten Werten zwischen den charakteristischen Maßzahlen und den zugehörigen Sichtweiten entsprechen, es zulässt. Deren Bestimmung bzw. Aktualisierung anhand eines im Fahrzeug vorhandenen Abstandsmesssystems sowie bekannter Wetterverhältnisse erfordert dennoch eine Ur-Kalibrierung, um überhaupt eine Referenzierung herstellen zu können.

Die Gebrauchsmusterschrift DE 68 12 334 U beschreibt ein Kalibriergerät für mit Rückstreuung arbeitende Sichtweitenmesser (Backscattergeräte), bei dem ein zwischen Lichtsender und Lichtempfänger einsetzbarer Lichtpfad, mindestens zwei hintereinander geschaltete rückstreuende Diffusoren und eine Blende angeordnet sind. Die Diffusoren können Glaskörper mit rauer, vorzugsweise mattierter oder feingekörnter Oberfläche sein. Ein derartig aufwändiger Versuchsaufbau zur Generierung von Referenzwerten kann nur eine grobe Klassifikation von Sichtweiten beeinträchtigenden Phänomenen, wie Nebeltröpfchen, ermöglichen.

Eine ähnliche Vorrichtung wird in der Patentschrift DE 36 01 386 C1 vorgeschlagen. Dabei wird ein Lichtstrahl von einem Sender auf ein reflektierendes Ziel gerichtet und die Phasendifferenz des reflektierten Lichtstrahls zum ausgesendeten Lichtstrahl von einem neben dem Sender angeordneten Empfänger gemessen. Zwischen dem Sender und dem Ziel ist ein Filter angeordnet, dessen Abstand vom Sender eine Funktion der bei einer bestimmten Nebeldichte herrschenden Sichtweite ist und anhand dessen der Transmissionsgrad und der Streufaktor eingestellt werden können. Auch hier werden aufwändig Referenzwerte erzeugt, anhand derer durch Vergleich die Sichtweite bestimmt wird.

Die im Stand der Technik bekannten Verfahren zur Sichtweitenschätzung setzen Referenzwerte voraus, die nur aufwändig und beispielhaft (experimentell) ermittelt werden können. Da die eigentliche Sichtweitenschätzung durch Vergleich mit mehr oder weniger grob klassifizierten Referenzwerten erfolgt, ist die geschätzte Sichtweite immer ungenau und ein Kompromiss.

Darüber hinaus ist es bekannt, sogenannte Ray-Tracing-Verfahren anzuwenden, die die Wege einzelner ausgesendeter Lichtstrahlen unter hohem rechnerischen Aufwand simulieren. So offenbart die Patentschrift DE 2004 017 884 B3 ein Verfahren zur rechnerischen Ermittlung des sichtbaren Leuchtmusters einer Leuchte. Dabei wird ein dreidimensionales virtuelles Modell der Leuchte verwendet und zu jeder Leuchtquelle der durch Reflexion, Refraktion und/oder Absorption an Leuchtenabschnitten beeinflusste Verlauf einer beliebigen Anzahl von von der Leuchtquelle ausgesandten Strahlen ermittelt. Anhand der die Leuchte verlassenden Strahlen wird ein Strahlungsvektorfeld am Leuchtenausgang ermittelt. Mithilfe dieses Strahlenvektorfeldes kann ein blickwinkelspezifisches Leuchtmuster in Abhängigkeit des wählbaren virtuellen Blickwinkels ermittelt werden. Ein derartiges Verfahren zur Verfolgung von Lichtstrahlen setzt ein Modell der Leuchte voraus, was für einzelne Leuchten beispielsweise anhand fotogoniometrischer Vermessungen bestimmt werden kann. Jedoch erfordert die Verfolgung eines Strahlungsvektorfeldes in einem streuenden Medium einen rechentechnischen Aufwand, der eine quantitative Sichtweitenbestimmung bei unterschiedlichen Wetterverhältnissen nahezu unmöglich, in jedem Fall unpraktikabel macht.

**Aufgabe der Erfindung**

Die Aufgabe der vorliegenden Erfindung ist die Weiterentwicklung des Standes der Technik hinsichtlich der Bestimmung des Verlaufes von Strahlung in streuenden Medien sowie die Verbesserung der Anwendbarkeit des ermittelten Verlaufs der Strahlung in streuenden Medien.

**Offenbarung der Erfindung**

Die Aufgabe wird durch ein Verfahren zur quantitativen Bestimmung von zeitlichen und räumlichen Strahlungsverteilungen in einem streuenden Medium aus der Abstrahlcharakteristik einer Strahlungsquelle entsprechend den Maßnahmen des unabhängigen Anspruchs 1 gelöst. Die Aufgabe wird weiterhin durch ein Verfahren zur quantitativen Bestimmung der Sichtweite in einem homogenen, streuenden Medium entsprechend den Maßnahmen des nebengeordneten Anspruchs 4 gelöst.

Der Erfindung liegt das technische Problem zu Grunde, räumliche und zeitliche Strahlungsverteilungen in streuenden Medien quantitativ zu bestimmen, die für technische Anwendungen und Bewertungen, vorzugsweise für Scheinwerfer von Fahrzeugen, benötigt werden.

Die Erfindung betrifft ein Verfahren zur quantitativen Bestimmung von einer zeitlichen und räumlichen Verteilung von Lichtstrahlen in einem streuenden Medium aus der Abstrahlcharakteristik einer Lichtquelle, wobei die Abstrahlcharakteristik vorzugsweise durch von einem Lichtstärkeverteilungskörper (LVK) beschriebene Lichtstrahlen gegeben ist, wobei die Lichtstrahlen an Elementen (Teilchen) des Mediums gestreut werden.

Licht kann als elektromagnetische Welle beschrieben werden, wobei der sichtbare Teil des elektromagnetischen Spektrums bei Wellenlängen zwischen ca. 380nm und 780nm liegt. Außerdem kann Licht als Teilchenstrom, genauer als Photonenstrom beschrieben werden (Welle-Teilchen-Dualismus). Die Ausbreitung von Licht lässt sich durch gerade Strahlen veranschaulichen, was auch im Folgenden als Darstellungsmittel gewählt wird. Ein Bindeglied zwischen Wellenoptik und Strahlenoptik ist der Wellenvektor, dessen Richtung mit der Richtung des Lichts übereinstimmt. Lichtstrahlen breiten sich immer geradlinig aus, bis sie auf einen anderen Körper treffen, und durch Reflexion, Brechung oder Streuung ihre Richtung ändern. Bei der Streuung erfolgt die Richtungsänderung nicht wie bei der Reflexion gerichtet, sondern diffus.

Streuende Medien bestehen aus festen, flüssigen oder gasförmigen Stoffen bzw. Teilchen, beispielsweise Stickstoffmoleküle in der Atmosphäre. Ist die Verteilung der beeinflussenden Teilchen gleichverteilt, wie z. B. lokal betrachtet in der Atmosphäre, spricht man von homogenen streuenden Medien. Im Folgenden wird unter einem streuenden Medium vor allem Nebel bzw. im weiteren Sinne Niederschlag verstanden, ohne die Anwendbarkeit der vorliegenden Erfindung diesbezüglich einzuschränken. Dabei tritt sogenannte Volumenstreuung auf, da die Lichtstrahlen vielfach an Nebelpartikeln, meist Wassertröpfchen, gestreut werden. Dadurch und durch Absorption, die in der praktischen Anwendung vernachlässigt werden kann, werden die Lichtstrahlen gedämpft.

Sowohl die Größe der Nebelpartikel als auch deren Verteilungsdichte, die lokal als homogen angenommen werden kann, beeinflussen den Betrag der Lichtdämpfung und damit direkt die Sichtweite. Letztere ist, gemeinsam mit Selbstblendung durch Rückstreuung sowie direkte oder indirekte Blendung durch Vorwärtsstreuung, ein problematisches Phänomen vor allem im Verkehr zu Lande, zu Wasser und in der Luft. Zur einfacheren Darstellung wird sich im Folgenden auf den Landverkehr und dort hauptsächlich auf den Kraftfahrzeug-Straßenverkehr bezogen.

Jedes der genannten problematischen Phänomene wird durch denselben Sachverhalt verursacht, der aus jeweils unterschiedlichen Perspektiven betrachtet unterschiedliche Folgen hervorruft. Die Ursache ist die zeitliche und räumliche Verteilung der Lichtstrahlen im Nebel, die eben nicht linear erfolgt. Die zeitliche Verteilung bedeutet, dass sich die Verteilung im Zeitablauf verändert. Dies ist nicht auf das Medium selbst bezogen, sondern auf die Dauer der Einwirkung des Mediums auf die Strahlung, im einfachsten Fall auf die Laufzeit des Lichtstrahles durch das Medium, mithin die Ausdehnung des Nebels oder die Relativposition des Betrachters bzw. Beobachters im Vergleich zur Quelle der Lichtstrahlen (Lichtquelle), die beispielsweise ein Scheinwerfer sein kann. Die räumliche Verteilung betrifft die eben nicht lineare sondern anscheinend zufällige Verteilung jedes Lichtstrahls durch Streuung. Wie bereits erwähnt, erfolgt die räumliche Verteilung diffus, was eine Nachverfolgung des Lichtstrahls vor allem durch die Vielzahl der zu verfolgenden Lichtstrahlen durch Ray-Tracing mit praktikablem Aufwand nahezu ausschließt.

Die quantitative Bestimmung der zeitlichen und räumlichen Verteilung der Lichtstrahlen liefert physikalisch fundierte und messtechnisch überprüfbare Ergebnisse. Diese weisen im Gegensatz zu experimentell gewonnenen Verteilungen keine diskreten, sondern stetige Gültigkeitsbereiche unter Berücksichtigung einer Vielzahl von Einflussgrößen auf. Das Verfahren wird am lichttechnischen Beispiel vorgestellt und ist analog auf Strahlungsquellen, Strahlungsfelder sowie verschiedenste homogene und streuende Medien übertragbar.

Die Abstrahlcharakteristik der Lichtquelle beschreibt, wie sich das Licht von der Lichtquelle aus im Raum, also dreidimensional, verteilt. Eine gängige und bevorzugte Darstellung bzw. Beschreibung der Abstrahlcharakteristik basiert auf der Anwendung eines Lichtstärkeverteilungskörpers (LVK), der sowohl messtechnisch erfassbar als auch gezielt konstruierbar ist und als quasi standardisiertes Format einer Vielzahl von Untersuchungen und Verarbeitungen unterliegen kann. Der LVK beschreibt eine dreidimensionale Lichtstärkeverteilung $I(\theta, \varphi)$, bei der innerhalb eines Bezugssystems ein Lichtstrom mit der Lichtstärke I in einem vertikalen Winkel $\theta$ und einem horizontalen Winkel $\varphi$ von einer Lichtquelle abgegeben bzw. abgestrahlt wird. Das Bezugssystem wird üblicherweise durch die Lichtquelle definiert. Im vorliegenden bevorzugten Anwendungsgebiet handelt es sich dabei um wenigstens einen Scheinwerfer eines Fahrzeuges. Das Bezugssystem ist dabei gemeinhin das Fahrzeugkoordinatensystem, wobei der Nullpunkt je nach Betrachtungsweise in einen der Scheinwerfer oder zwischen mehreren Scheinwerfern verschoben werden kann.

Das erfindungsgemäße Verfahren umfasst den Schritt des Bestimmens einer Strahlungsrichtung $(\theta, \varphi)$ und einer Lichtstärke $I(\theta, \varphi)$ eines der Lichtstrahlen in Abhängigkeit eines vertikalen Winkels $\theta$ und eines horizontalen Winkels $\varphi$ eines Bezugssystems und Definieren eines Strahlungsvektors k mit der Richtung $(\theta, \varphi)$ und dem Betrag $I(\theta, \varphi)$. Das Bestimmen der Strahlungsrichtung und der Lichtstärke erfolgt durch Auslesen bzw. Ableiten aus der Abstrahlcharakteristik, vorzugsweise aus dem LVK, für jeweils einen vertikalen und einen horizontalen Winkel. Da sich die Lichtstrahlen entsprechend der Strahlenoptik von der Lichtquelle aus strahlenförmig ausbreiten, eignet sich zur Bestimmung bzw. Definition der Strahlungsrichtung die Nutzung eines vertikalen und horizontalen Winkels im Bezugssystem, vorzugsweise in einem Koordinatensystem, z. B. Polarkoordinatensystem, mit dem Ursprung in der Lichtquelle, da durch die Wahl von zwei Winkeln sämtliche (dreidimensionalen) Raumrichtungen eindeutig festlegbar bzw. beschreibbar sind. Selbstverständlich kann jede weitere Bezugsmethode, die zur eindeutigen Festlegung einer Raumrichtung geeignet ist, verwendet werden.

Bei einem stetigen LVK stehen unendlich viele Raumrichtungen und damit unendlich viele Lichtstrahlen zur Auswahl. Selbstverständlich ist die Auswahl eines einzelnen Lichtstrahls nicht geeignet, eine Abstrahlcharakteristik sowie positive oder negative Effekte der Beleuchtung zu erzeugen, zu erklären oder darzustellen. Bei Ray-Tracing-Verfahren wird Prinzip bedingt immer eine endliche Anzahl von Lichtstrahlen betrachtet, was das Verfahren per se ungenau macht. Um eine Aussage mit hinreichender Sicherheit bzw. Aussagekraft zu treffen, ist eine große Anzahl von Lichtstrahlen zu betrachten. Dies ist auch im vorliegenden Verfahren der Fall. Allerdings werden keine einzelnen Lichtstrahlen verfolgt, sondern Raumrichtungen, die zu Raumwinkeln aggregiert, vorzugsweise integriert werden können. Wird im Folgenden von einzelnen ausgewählten Lichtstrahlen gesprochen, ist Licht einer durch die zwei Winkel definierten Raumrichtung gemeint, die mit dem Licht weiterer Raumrichtungen zu einer stetigen Lichtverteilung in einem Raumwinkel integriert werden kann. Der Singular dient lediglich der besseren Verständlichkeit.

Genau wie die stetige Verteilung des LVK über einen Raumwinkel, kann auch die Verteilung der Wellenlängen des ausgesandten Lichtes einer Raumrichtung stetig im LVK hinterlegt sein. Wird nun die Lichtstärke I einer Raumrichtung aus dem LVK bestimmt, so kann diese Lichtstärke wellenlängenabhängig im LVK hinterlegt sein. Ist dies der Fall, erfolgt das Bestimmen der Lichtstärke $I(\theta, \varphi)$ durch Integration der spektralen Verteilung des Lichtstrahls einer Strahlungsrichtung $(\theta, \varphi)$ zur Lichtstärke $I(\theta, \varphi)$ eines der Lichtstrahlen.

Anhand der Strahlungsrichtung $(\theta, \varphi)$ und der Lichtstärke $I(\theta, \varphi)$ kann nun ein Strahlungsvektor k definiert werden, mit der Richtung $(\theta, \varphi)$ der Strahlungsrichtung $(\theta, \varphi)$ und dem Betrag $I(\theta, \varphi)$ der Lichtstärke $I(\theta, \varphi)$. Damit wird die Darstellung der Realität mit mathematischen Instrumenten unter Einhaltung der kausalen Wirkungskette ermöglicht.

Ein weiterer Schritt des erfindungsgemäßen Verfahrens ist das Bestimmen einer streuungsabhängigen Lichtstärkeverteilung $I_{Impuls}(\alpha_{Impuls}, t)$ des Strahlungsvektors k in Abhängigkeit der Laufzeit des Lichtes und einer Nebeldichte im Impulsraum.

Streuung ist der wesentliche Bestandteil bzw. Ursache der vom Nebel hervorgerufenen Lichtdämpfung und soll daher isoliert betrachtet bzw. quantitativ bestimmt werden. Die Erfinder haben nun erkannt, dass sich der Lichtstrahl, der in einer Strahlungsrichtung abgestrahlt wird, im Impulsraum auf einem Ausgangspunkt befindet, und zwar zunächst ohne Streuung und Absorption für alle Zeiten t. Setzt nun Streuung ein, werden Teile des Lichtstrahls aus der ursprünglichen Bewegungsrichtung (Strahlungsrichtung) herausgestreut. Der Betrag des Strahlungsvektors k ändert sich aber nicht. Alle Lichtstrahlen befinden sich auf einer Kugel mit dem Radius k. Die Lichtstrahlen diffundieren mit der Zeit im Impulsraum aus dem ursprünglichen Punkt über die gesamte Kugeloberfläche und verteilen sich.

Mit Teilen des Lichtstrahls können unterschiedliche Wellenlängen gemeint sein. Physikalisch exakt müsste jede Wellenlänge individuell betrachtet werden. Dies liegt an der Wellenlängenabhängigkeit der Materiallichtgeschwindigkeit und der Nebeldichte bzw. der Diffusionskonstanten, aus der insgesamt eine Dispersion, d. h. eine Wellenlängenabhängigkeit der Nebelstreuung resultiert. Dies ist aber praktisch für das menschliche Auge nicht wahrnehmbar, da letzten Endes alle Wellenlängen durcheinander gestreut werden. In der Lichttechnik, in der dieses Phänomen bekannt ist, werden, wie oben erläutert, alle Wellenlängen mit einer Gewichtungsfunktion integriert, so dass die Wellenlängenabhängigkeit explizit entfällt und eine Art Schwerpunktwellenlänge zur weiteren Berechnung herangezogen werden kann. Im vorliegenden Verfahren ist es mathematisch ohne weiteres möglich, das Licht aus unterschiedlichen Wellenlängen bestehend zu betrachten. Dies würde allerdings den rechnerischen Aufwand erhöhen, jedoch wäre das Verfahren im Gegensatz zu Ray-Tracing-Verfahren immer noch prinzipiell praktikabel umsetzbar. Ein weiterer Vorteil der Nutzung des Impulsraumes ist, dass auch eine aus einer Wellenlänge bestehende Strahlung teilweise gestreut werden kann.

Um nun den oben definierten Strahlungsvektor k einer Streuung zu unterziehen, die mathematisch einfach bestimmt wird und das natürliche Phänomen der Streuung realitätsgerecht beschreiben kann, haben die Erfinder weiterhin erkannt, dass die Streuung eines Lichtstrahls an Nebelpartikeln, wenn der Lichtstrahl als Impuls im Impulsraum betrachtet wird, analog ist zur Diffusion eines Stoffes in einem Medium, die scheinbar durch den Konzentrationsgradienten getrieben, mikroskopisch jedoch durch Streuung unter Molekülen hervorgerufen wird. Gleiches gilt im Übrigen für die Diffusion von Wärme in einem Medium, die scheinbar durch den Temperaturgradienten getrieben ist, mikroskopisch jedoch durch Streuung der Quasiteilchen im Festkörper erklärt werden kann. Da also bei der Nebelstreuung im Impulsraum der gleiche Effekt wie bei der Diffusion im Ortsraum stattfindet, kann analog die Diffusionsgleichung bzw. die Wärmeleitungsgleichung (2. Fick'sches Gesetz) übernommen werden. Es werden also bekannte physikalische Vorgänge auf das Phänomen der Streuung übertragen, um diese technisch bestimmen zu können.

Der Ortsraum ist der gewöhnliche dreidimensionale Euklidische Raum, in dem auch das verwendete Bezugssystem angeordnet ist. Gegenüber diesen drei Dimensionen (Ortsfreiheitsgrade) kann ein physikalisches System weitere Freiheitsgrade aufweisen, wie z. B. Geschwindigkeit, Impuls oder Spin, die in zusätzlichen Räumen beschrieben werden, wie z. B. der Impuls im Impulsraum. Beide Räume sind bei vorliegendem Problem gleichwertig, jedoch ist die technische Bearbeitung bestimmter Fragestellungen in einem der beiden Räume einfacher. Am Beispiel der Streuung von Licht lässt sich das einfach verdeutlichen. Im Ortsraum ist Licht ein Strom von Photonen, der auf ein Teilchen (z. B. Nebelpartikel) trifft. Jedes Photon wird dabei aus derselben ursprünglichen Richtung in eine jeweils andere Richtung abgelenkt. Eine technische Bestimmung der Richtung jedes Photons ist praktisch nicht möglich. Im Impulsraum hingegen wird die technische Bestimmung der Streuungsrichtung durch die Anwendung der Diffusionsgleichung mit relativ geringem Aufwand möglich. Der physikalische Vorgang selbst ist aber derselbe.

Im Impulsraum weist der Strahlungsvektor ein eigenes Bezugssystem auf. Zur Verdeutlichung dieser Tatsache wird der Streuwinkel daher als $\alpha_{Impuls}$ bezeichnet. Der Streuwinkel ist generell als der Winkel definiert, um den das gestreute Teilchen abgelenkt wird. Der Streuwinkel im Impulsraum ist der Winkel zwischen der ursprünglichen Strahlungsrichtung und der neuen, also der gestreuten Strahlungsrichtung, ausgehend vom dem einen Ausgangspunkt im Impulsraum. Es ergibt sich eine Lichtstärkeverteilung $I_{Impuls}(\alpha_{Impuls}, t)$, die jedem möglichen Streuwinkel $\alpha_{Impuls}$ und jeder vergangenen Zeit t eine Lichtstärke zuordnet.

Die Lösung der Diffusionsgleichung entspricht einer Gaußverteilung in zwei Dimensionen:

$$I_{Impuls}\bigl(\alpha_{Impuls}, t\bigr) = I_0 * \frac{1}{4\pi at} * e^{-\frac{\alpha_{Impuls}^2}{4at}} \tag{1}$$

Die Zeit t, mit der k diffundiert, ist die Laufzeit des Lichts. Bei einer beispielhaften Strecke von 100 m und einer gerundeten Lichtgeschwindigkeit von $3*10^9$ m/s ergibt sich eine Zeit von $3,3*10^{-7}$ s. Zur Anwendung der Diffusionsgleichung wird noch eine Diffusionskonstante a benötigt. Diese ist ein Maß für die Dichte des Nebels, welche wiederum von der Nebelpartikelgröße und der Verteilungsdichte abhängt. Die Normierung erfolgt über die Lichtmenge I, die sowohl mit als auch ohne Nebel in Summe konstant bleiben muss. Zum Zeitpunkt t=0 wird die Lichtmenge als $I_0$ bezeichnet.

Die Bezugssysteme aus Impuls- und Ortsraum müssen mathematisch in Einklang gebracht werden. Dazu erfolgt im nächsten Schritt im erfindungsgemäßen Verfahren das Transformieren der streuungsabhängigen Lichtstärkeverteilung im Impulsraum $I_{Impuls}(\alpha_{Impuls}, t)$ in eine streuungsabhängige Lichtstärkeverteilung im Ortsraum $I_{Ort}(\alpha_{Ort}, t)$, vorzugsweise erfolgt das Transformieren der streuungsabhängigen Lichtstärkeverteilung im Impulsraum $I_{Impuls}(\alpha_{Impuls}, t)$ in eine streuungsabhängige Lichtstärkeverteilung im Ortsraum $I_{Ort}(\alpha_{Ort}, t)$ durch eine Fourier-Transformation des Streuwinkels $\alpha_{Impuls}$ im Impulsraum in einen Streuwinkel $\alpha_{Ort}$ im Ortsraum. Der Streuwinkel $\alpha_{Ort}$ im Ortsraum kann nicht definiert werden als der Winkel zwischen der ursprünglichen Strahlungsrichtung und der neuen, abgelenkten Strahlungsrichtung, weil wie oben hergeleitet, die abgelenkte Strahlungsrichtung nicht eindeutig festgelegt ist, da die Streuung anscheinend diffus erfolgt. Es kann aber über die technische Bestimmung der Streuung im Impulsraum eine eindeutige Aussage zur streuungsabhängigen Lichtstärke in einer ausgewählten Raumrichtung getroffen werden. Diese Raumrichtung ist gekennzeichnet durch einen Beobachterpunkt P, der im Ortsbezugssystem durch einen vertikalen Winkel $\theta_P$ und einen horizontalen Winkel $\varphi_P$ und einen Abstand rp vom Ursprung des Ortsbezugssystems definiert ist. Es wird also die auf den Beobachterpunkt einfallende Lichtstärke ermittelt. Der Streuwinkel $\alpha_{Ort}$ im Ortsraum ist somit definiert als der Winkel zwischen der ursprünglichen Strahlungsrichtung $(\theta, \varphi)$ und der Beobachterrichtung $(\theta_P, \varphi_P)$ und kann auch ausgedrückt werden als $\alpha(\theta_P, \varphi_P, \theta, \varphi)$.

Die Verknüpfung von Orts- und Impulsraum über die Fourier-Transformation erfolgt über die Einheitsvektoren der Streurichtung im Impulsraum, was mathematisch nicht nur einfach bestimmt werden kann sondern auch technisch kausal die Realität beschreibt und im Ergebnis die streuungsabhängige Lichtstärkeverteilung im Ortsraum $I_{Ort}(\alpha_{Ort}, t)$ widergibt.

Schließlich erfolgt das Bestimmen einer Beleuchtungsstärke $E(\theta_P, \varphi_P, r_P)$ eines Beobachterpunktes P im Ortsraum in Abhängigkeit des Beobachtungswinkels $\alpha(\theta_P, \varphi_P, \theta, \varphi)$ und der Entfernung $r_P$ aus einer entfernungsabhängigen Lichtstärke $I_E(\theta, \varphi, r_P)$ und der streuungsabhängigen Lichtstärkeverteilung im Ortsraum $I_{Ort}(\alpha_{Ort}, t)$. Die Beleuchtungsstärke ist der auf eine Fläche einfallende Lichtstrom, wobei die Fläche durch einen Raumwinkel und im speziellen Fall durch eine Raumrichtung definiert werden kann. Die Beleuchtungsstärke ist im Wesentlichen von zwei Faktoren abhängig, nämlich von der ursprünglich ausgesendeten Lichtstärke (pro Raumwinkel ausgesendeter Lichtstrom) und der Entfernung des Beobachterpunktes von der Lichtquelle. Im vorliegenden Fall ist die ausgesendete Lichtstärke in einer Raumrichtung bereits bekannt. Die Entfernung zur Lichtquelle ist durch den Beobachterpunkt, der ja gerade durch zwei Raumwinkel und eine Entfernung definiert ist, ebenfalls gegeben. Die Entfernung hat doppelten Einfluss: aufgrund des fotometrischen Entfernungsgesetzes nimmt die Beleuchtungsstärke proportional zum Quadrat der Entfernung ab, was natürlich auch für gestreutes Licht gilt, und die Streuung nimmt proportional zur Entfernung zu. Der erste Einflussfaktor wird durch die entfernungsabhängige Lichtstärke $I_E(\theta, \varphi, r_P)$ ausgedrückt und der zweite Einflussfaktor durch die streuungsabhängigen Lichtstärkeverteilung im Ortsraum $I_{Ort}(\alpha_{Ort}, t)$.

Die Kombination beider Einflussfaktoren liefert folgende Beleuchtungsstärke:

$$E(\theta_P, \vartheta_P, r_P) = \iint_{\theta,\vartheta} \frac{I(\theta,\vartheta)}{r_P^2} * I_{Orts}(\alpha(\theta_P, \vartheta_P, \theta, \vartheta), t) d\theta d\vartheta \qquad (2),$$

wobei die Zeit t in Abhängigkeit der Entfernung $r_P$ und der Lichtgeschwindigkeit c ermittelt wird.

Im Ergebnis liefert die Erfindung eine quantitative Aussage über die Lichtdämpfung in homogenen, streuenden Medien. Das Ergebnis ist um Größenordnungen genauer als im Stand der Technik bei gleichzeitig wesentlich herabgesetztem Rechenaufwand bzw. Ressourceneinsatz. Darüber hinaus ist diese quantitative Aussage als Funktionswert in Abhängigkeit stetiger, voneinander unabhängiger Einflussfaktoren darstellbar, die nicht nur als Referenz für diverse Verfahren im Stand der Technik dienen, sondern auch online für den konkreten Einsatz bestimmt werden kann.

Durch die Ermittlung der Beleuchtungsstärke basierend auf den zwei wesentlichen Komponenten der Lichtdämpfung in homogenen, streuenden Medien, ermöglicht das erfindungsgemäße Verfahren die Einbeziehung von Überlagerungseffekten, wie Verstärkung und Abschwächung der Lichtstrahlen einzelner Raumrichtungen.

Der überraschend einfache aber eben nicht naheliegende kausale Zusammenhang zwischen der Nebelstreuung von Licht im Impulsraum und der Diffusion unterschiedlicher Medien im Ortsraum ermöglicht überhaupt erst die funktionelle quantitative Bestimmung der zeitlichen und räumlichen Verteilung von Lichtstrahlen in einem streuenden Medium innerhalb eines praktikablen Rahmens. Da eine quantitative Bestimmung stattfindet, ist keine Kalibrierung mit Vergleichsdaten oder die experimentelle Ermittlung von Referenzdaten erforderlich.

Ein weiterer Vorteil ist, dass auch Blendung, beispielsweise weiterer Verkehrsteilnehmer, im Nebel bestimmbar ist. Durch die im Nebel auftretende Streuung des Lichts und der damit einhergehenden Ablenkung der Lichtstrahlen kann eine ursprüngliche Lichtverteilung ihren eigentlichen Zweck nicht mehr erfüllen. Als Beispiel sei eine Abblendlichtverteilung eines Fahrzeugscheinwerfers genannt. Durch Streuung der Lichtverteilung kann es zur Blendung von Führern entgegenkommender Fahrzeuge kommen. Der Beobachterpunkt kann auch entgegen der eigentlichen Strahlrichtung liegen. So kann eine Selbstblendung bestimmt werden.

In einer vorteilhaften Weiterbildung des erfindungsgemäßen Verfahrens wird eine Beleuchtungsstärkeverteilung $E(\theta_P, \varphi_P, d_P)$ für eine Vielzahl von Beobachterpunkten P jeweils eines identischen Abstandes dp bestimmt und als zusammenhängende Verteilung anhand visueller Kriterien bewertet. Eine Beleuchtungsstärkeverteilung entspricht einem Beleuchtungsbild oder Beleuchtungsmuster, das auf einen Untergrund einstrahlt. Eine Beleuchtungsstärkeverteilung gibt die von einem Scheinwerfer auf einer Ebene erzeugte ortsabhängige Beleuchtungsstärke an. Derartige Beleuchtungsstärkeverteilungen werden beispielsweise zur Bewertung von Scheinwerfern von Fahrzeugen herangezogen. Diese können direkt am Messschirm bestimmt oder auf der Straße bzw. auf dem Untergrund parallel zum Fahrzeugboden mittels einer Leuchtdichtekamera erfasst werden. Die Weiterbildung des erfindungsgemäßen Verfahrens ermöglicht nun die quantitative Bestimmung der Beleuchtungsstärkeverteilung am Messschirm mit jeder beliebigen Nebeldichte, was insbesondere durch den Vergleich mit der Beleuchtungsstärkeverteilung ohne Nebel Aussagen zur visuellen Wahrnehmung ermöglicht, z. B. hinsichtlich der noch wahrnehmbaren Kontraste und Helligkeiten oder der noch vorhandenen Ausleuchtung der Umgebung, z. B. der Fahrbahn, ermöglicht. Vorteilhafterweise können dadurch Scheinwerfer schon vor deren Einbau im Fahrzeug bereits im Konstruktionsstadium hinsichtlich ihrer Eigenschaften im Nebel bewertet und kostengünstig optimiert werden.

In einer weiteren Weiterbildung des erfindungsgemäßen Verfahrens kann eine Vielzahl von Beleuchtungsstär-

ken $E(\theta_P, \varphi_P, v_P)$ für wenigstens einen Beobachterpunkt P oder ein begrenztes Umfeld um den Beobachterpunkt P mit jeweils unterschiedlichen Abständen vp oder mit jeweils unterschiedlichen Beobachtungswinkeln $\alpha(\theta_P, \varphi_P, \theta, \varphi)$ und Abständen vp bestimmt und einzeln oder als Abfolge anhand visueller Kriterien bewertet werden. Damit ist es im Gegensatz zur standardisierten Bewertung des Scheinwerfers am Messschirm möglich, konkrete Situationen der Wahrnehmung des von der Lichtquelle ausgesendeten Lichtes, die nicht großflächig sondern eher punktuell erfolgt, zu bewerten. Besonders vorteilhaft können durch die verschiedenen Abstände der Beobachterpunkte bzw. die verschiedenen Abstände in Kombination mit verschiedenen Beobachterwinkeln einzeln und vor allem in Abfolge hintereinander dynamische Situationen anhand visueller Kriterien bewertet werden. Beispielsweise kann bewertet werden, wie der Führer eines entgegenkommenden und/oder vorbeifahrenden Fahrzeugs das Licht im Nebel wahrnimmt. Dabei werden vor allem die absoluten Beleuchtungsstärken im Sinne von Helligkeiten interessant sein. Dies ermöglicht ebenfalls eine Bewertung des Scheinwerfers hinsichtlich typischerweise auftretender Situationen noch während der Konstruktionsphase und eine darauf basierende kostengünstige Optimierung.

Der erfindungsgemäße Gedanke der Analogie der technischen Bewertung der Streuung eines Lichtstrahls an Nebelpartikeln, wenn der Lichtstrahl als Impuls im Impulsraum betrachtet wird, zur Diffusion eines Stoffes in einem Medium bzw. der Diffusion von Wärme in einem Medium, entsprechend des Verfahrens nach Anspruch 1 kann auch in umgekehrter Reihenfolge genutzt werden. Dabei wird aus einer erfassten Streuung eine Nebeldichte bzw. eine Nebelverteilung rückgerechnet und damit quantitativ bestimmbar. Aufgrund der selben technischen Wirkprinzips werden die physikalischen Grundlagen und damit auch die Begrifflichkeiten der Beschreibung des ersten erfindungsgemäßen Verfahrens hiermit explizit vollständig für das zweite erfindungsgemäße Verfahren übernommen und einbezogen.

Es ergibt sich somit ein weiteres erfindungsgemäßes Verfahren zur quantitativen Bestimmung der Sichtweite in einem homogenen, streuenden Medium. Die Sichtweite wird üblicherweise über den gerade noch wahrnehmbaren Kontrastunterschied zwischen einem dunklen Objekt vor einem hellen Hintergrund definiert. Die Beschränkung der Bestimmung der quantitativen Sichtweite auf die Bestimmung in homogenen streuenden Medien blendet einerseits Sichtweitenbegrenzungen durch Abschattung (z. B. Totalabsorption an einer Mauer) aus und spiegelt andererseits die in der Realität mit Abstand am häufigsten auftretenden Fälle von Sichtweitenbegrenzungen wider. Diese beruhen nämlich größtenteils auf atmosphärischen Effekten, deren lokal angenommene Homogenität durchaus der Realität entspricht. Dabei ist es grundsätzlich egal, ob die Streuung des Lichts durch Hydrometeore, Lithometeore oder Aerosole hervorgerufen werden. Auch die unterschiedliche Streuungswirkung dieser Teilchen ist unerheblich, da unter oben genannten Bedingungen, die Sichtweite (im engeren Sinne) einzig von der Lichtdämpfung und damit hauptsächlich von der Lichtstreuung abhängt.

Dabei werden Bilddaten wenigstens einer Lichtquelle aus der Umfeld mittels wenigstens eines Umfelderfassungsmittels erfasst, wobei die Beleuchtungsstärke der wenigstens einen Lichtquelle ermittelt wird. Umfelderfassungsmittel zum Erfassen von Bilddaten können beispielsweise Kameras sein. Diese können Mono- und Stereokameras sein. In den Bilddaten wird wenigstens eine Lichtquelle identifiziert. Dies erfolgt anhand bekannter Bildauswerteverfahren, z. B. über den Kontrast, die Helligkeit oder Helligkeitsgradienten. Die Ermittlung der Beleuchtungsstärke erfolgt vorzugsweise mittels ein- oder zweidimensionaler Integration des eingehenden Lichtstroms.

Weiterhin wird die Laufzeit des Lichtes ($t_{Laufzeit}$) der wenigstens einen Lichtquelle zwischen der Lichtquelle und dem wenigstens einen Umfelderfassungsmittel aus den Bilddaten des wenigstens einen Umfelderfassungsmittels und/oder aus Daten wenigstens eines weiteren Umfelderfassungsmittels ermittelt. Die Laufzeit des Lichtes kann mit der Entfernung zwischen der wenigstens einen Lichtquelle und dem wenigstens einen Umfelderfassungsmittel gleichgesetzt werden, da der Zusammenhang beider Größen über die weitestgehend konstante Lichtgeschwindigkeit fest definiert ist. Die Ermittlung der Laufzeit selbst bzw. der Entfernung kann auf vielfältige Art und Weise erfolgen. Eine Möglichkeit ist die direkte Ermittlung über das wenigstens eine Umfelderfassungsmittel selbst, wenn dieses dazu ausgelegt ist, was beispielsweise bei einer Stereokamera der Fall wäre. Eine weitere Möglichkeit ist die indirekte Ermittlung über das wenigstens eine Umfelderfassungsmittel, beispielsweise anhand der Abstände von zwei Lichtquellen, die über eine hinterlegte Vergleichstabelle näherungsweise erfolgen kann. Außerdem kann die Entfernung über weitere Umfelderfassungsmittel direkt gemessen werden, was beispielsweise mittels eines RADAR-Gerätes umgesetzt werden kann. Sind mehrere Umfelderfassungsmittel vorhanden, können die einzelnen ermittelten Laufzeiten gegenseitig validiert bzw. plausibilisiert werden.

Weiterhin wird der Halbwertswinkel $\alpha_{Halbwert}$ der Helligkeitsverteilung des gestreuten Lichtes der wenigstens einen Lichtquelle aus den Bilddaten des wenigstens einen Umfelderfassungsmittels und der Laufzeit des Lichtes $t_{Laufzeit}$ der wenigstens einen Lichtquelle ermittelt, wobei der Halbwertswinkel $\alpha_{Halbwert}$ der horizontale und/oder vertikale Raumwinkel ist, der, ausgehend von der Lichtquelle als Mittelpunkt, die bestimmte Beleuchtungsstärke in einem definierten Verhältnis teilt. Der Halbwertswinkel unterteilt die gesamte bestimmte Beleuchtungsstärke (Gesamtlichtmenge) in einen Anteil Auswertelichtmenge und eine Restlichtmenge. Der Halbwertswinkel ist der ebene Winkel zwischen den gleichgroßen Schenkeln des gleichschenkligen Dreiecks zwischen dem wenigstens einen Umfelderfassungsmittel und den beiden horizontalen oder vertikalen Rändern eines konzentrischen Abschnitts der Lichtquelle, der damit einem definierten Verhältnis der gesamten Lichtmenge der Lichtquelle entspricht. Der Halbwertswinkel kann auch als Raumwinkel mit horizontaler und vertikaler Ausdehnung ermittelt werden, wobei sich der Raumwinkel dabei beispielsweise als konzentrischer gerader Kreiskegel darstellt, dessen Scheitel im Umfelderfassungsmittel auf dem projizierten Mittelpunkt der Lichtquelle liegt. Die Bestimmung der erfassten Lichtmenge kann über die gesamte Fläche der erfassten Lichtquelle (im Falle des Raumwinkels) oder über eine Linie durch den Mittelpunkt der erfassten Lichtquelle (im Falle des ebenen Winkels als spezieller Raumwinkel) mittels zwei- bzw. eindimensionalen Integration der Beleuchtungsstärke erfolgen. Mit der realitätskonformen Annahme, dass die gesamte ausgestrahlte Lichtmenge einer Lichtquelle zwar durch Streuung gedämpft, jedoch vernachlässigbar durch Absorption verringert wird, kann die erfasste Lichtmenge mit der zum Zeitpunkt t=0 ausgestrahlten Lichtmenge $I_0$ gleichgesetzt werden.

Anders als der Name Halbwertswinkel nahelegt, muss der Halbswertswinkel die Lichtmenge entsprechend der ermittelten Beleuchtungsstärke nicht im Verhältnis 1:1 (Auswertelichtmenge zu Restlichtmenge), also zu 50% teilen (50% der erfassten Lichtmenge werden zur Betrachtung Ermittlung des maßgeblichen Winkels, nämlich des Halbwertswinkel herangezogen). Das erfindungsgemäße Verfahren funktioniert auch im Verhältnis 1:4 (20%) oder 4:1 (80%) und sogar darunter bzw. darüber hinaus, wobei bei einem Verhältnis von unter 20% an der Gesamtlichtmenge (gesamte bestimmte Beleuchtungsstärke) die eindeutige Abgrenzung zur Lichtquelle selbst erschwert ist, da diese in der Praxis keine Punktlichtquelle sondern ein Flächenstrahler ist. Im Gegenzug dazu ist bei einem Anteil von über 80% der Kontrastgradient des gestreuten Lichtes derart gering, dass ein minimaler Kontrastunterschied eine überproportional große Winkeldifferenz bedeutet, wobei derartige geringe Kontrastunterschiede in der Praxis schwer messbar sind. Daher wird aus praktischen Gesichtspunkten ein Halbwertswinkel festgelegt, der die erfasste Lichtmenge vorzugsweise im Verhältnis 2:3 (40%) bzw. 3:2 (60%), und besonders bevorzugt im Verhältnis 1:1 (50%) teilt.

Der Halbwertswinkel $\alpha_{\text{Halbwert}}$ wäre bei einer bekannten Lichtverteilung der Lichtquelle sowie des Abstandes zum Beobachter bereits ein quantitatives Maß für die Sichtweite. Allerdings ist die Lichtverteilung einer Lichtquelle meist nicht bekannt, jedoch kann der Helligkeitsverlauf quantitativ erfasst werden. Im Stand der Technik wird das Streuungsverhalten beispielsweise über Referenzdatensätze näherungsweise mit der Sichtweite korreliert. Diese müssen aber sehr aufwändig ermittelt werden und schließen eine Vergleichbarkeit der derart ermittelten Sichtweiten zwischen verschiedenen Systemen praktisch aus.

Demgegenüber kann anhand des erfindungsgemäßen kausalen Zusammenhangs zwischen der Nebelstreuung von Licht im Impulsraum und der Diffusion unterschiedlicher Medien im Ortsraum, was derselben technischen Wechselbeziehung wie bei der quantitativen Bestimmung der Verteilung von Lichtstrahlen in einem streuenden Medium entspricht, die Sichtweite quantitativ bestimmt werden. Dies erfolgt im nächsten Schritt durch Auswählen des dem Halbwertswinkel $\alpha_{\text{Halbwert}}$ entsprechenden definierten Verhältnisses der streuungsabhängigen Lichtstärkeverteilung im Impulsraum $I_{\text{Impuls}}$ zur Lichtmenge $I_0$. Dieses Verhältnis ist über das Transformieren der streuungsabhängigen Lichtstärkeverteilung im Impulsraum $I_{\text{Impuls}}(\alpha_{\text{Impuls}}, t)$ in eine streuungsabhängigen Lichtstärkeverteilung im Ortsraum Iort($a_{\text{ort}}$, t) (bzw. das Rücktransformieren von Orts- in den Impulsraum) entsprechend des ersten erfindungsgemäßen Verfahrens proportional mit dem Anteil der Auswertelichtmenge zur Gesamtlichtmenge verknüpft. Im Falle eines echten Halbwertswinkel, wenn also die Gesamtlichtmenge hälftig (50%) aufgeteilt ist, ergibt sich folgender Zusammenhang zwischen der Laufzeit des Lichtes und der Diffusionskonstante a (Maß für die Nebeldichte):

$$\alpha_{Halb} = \sqrt{\ln 2 * 4 * a * t_{Laufzeit}} \;(3).$$

Nach dem Auflösen von Gleichung (3) nach der Diffusionskonstante a erhält man diese in Abhängigkeit des Halbwertwinkels a und der Laufzeit

$$a = \frac{\alpha_{Halb}^2}{4 t_{Laufzeit} \ln 2} \;(3').$$

Schließlich wird die Nebeldichte aus dem Halbwertswinkel $\alpha_{\text{Halbwert}}$ und der Laufzeit des Lichtes der wenigstens einen Lichtquelle ermittelt und die quantitative Sichtweite abgeleitet. Im Ergebnis erhält man ein Maß für die Nebeldichte, nämlich die Diffusionskonstante a. Dies ist bereits ein Maß für die Sichtweite.

Das weitere erfindungsgemäße Verfahren ermöglicht vorteilhafterweise die quantitative Bestimmung der Sichtweite unabhängig von der tatsächlich ausgesendeten Lichtstärke, besonders weil diese im Allgemeinen unbekannt ist. Darüber hinaus kann das weitere Verfahren sowohl bei entgegenkommenden Lichtquellen (entgegenkommender Scheinwerfer) als auch bei vorausfahrenden Lichtquellen (vorausfahrende Rücklichter) angewendet werden. Die im Stand der Technik bekannten Verfahren zur Sichtweitenbestimmung werden dabei hinsichtlich der Genauigkeit deutlich verbessert. Außerdem können Nebeldichten und damit Sichtweiten, die von unterschiedlichen Systemen ermittelt wurden, miteinander verglichen werden. Dies liegt daran, dass ein Maß für die Sichtweite gefunden wurde, welches physikalisch begründet unter Nutzung des erfindungsgemäßen speziellen Merkmals ermittelt wird.

Selbstverständlich kann die qualitative Interpretation der Nebeldichte anwendungs- oder wetterphänomenspezifisch erfolgen. Eine Sichtweite von 200m entspricht beispielsweise im Straßenverkehr ausreichend guten Verhältnissen, wobei im Flug- oder Schiffsverkehr diese Sichtweite absolut unzureichend wäre. Auch die Interpretation unterschiedlicher Niederschlagsarten, wie Nebel, Regen oder Schneefall, können unterschiedlich ausfallen, obwohl die technische Sichtweite eigentlich gleich wäre.

**Ausführungsbeispiel**

Weitere Merkmale, Anwendungsmöglichkeiten und Vorteile der Erfindung ergeben sich aus der nachfolgenden Beschreibung von Ausführungsbeispielen der Erfindung, die schematisch in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

Hierbei zeigen die Figuren 1-4 jeweils eine Beleuchtungsstärkeverteilung am 25m-Schirm in Abhängigkeit der Nebeldichte. Die Figuren 5 und 6 zeigen die Ermittlung des Halbwertswinkels zur Bestimmung der Nebeldichte.

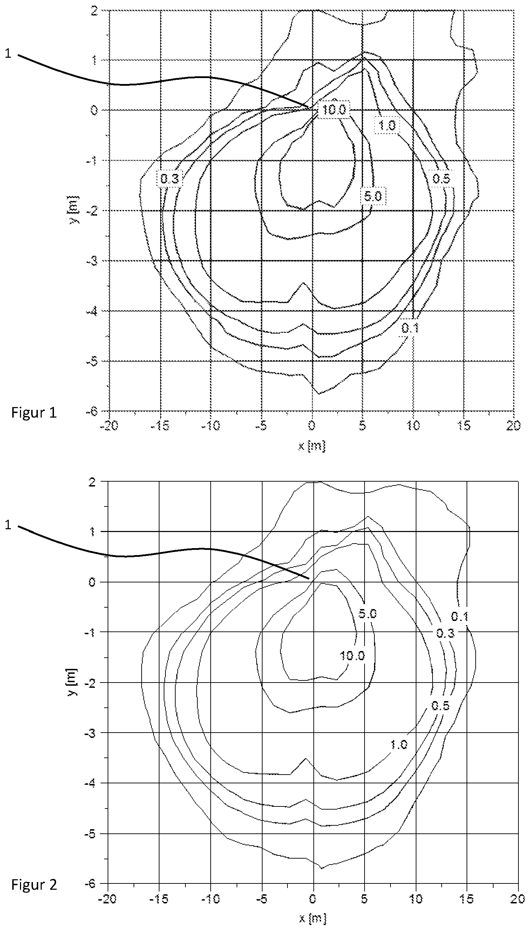

Figur 1 zeigt eine Beleuchtungsstärkeverteilung eines Fahrzeugscheinwerfers im Scheinwerferkoordinatensystem ohne Nebel. Derartige Beleuchtungsstärkeverteilungen werden zum Überprüfen oder Justieren von Scheinwerfern von Fahrzeugen während der Konstruktion, Zulassung oder regelmäßigen technischen Überprüfung real in 25m Abstand auf einem Messschirm erzeugt. Dabei kann die Lage der Beleuchtungsstärkeverteilung gegenüber gesetzlichen Vorschriften bewertet werden. Die Beleuchtungsstärkeverteilung ist durch Iso-Lux-Linien, also Kurven gleicher Beleuchtungsstärke gekennzeichnet. An den Kurven ist jeweils die Beleuchtungsstärke in Lux angezeichnet, um die Helligkeitsrelationen darzustellen. Die 1-Lux-Linie im oberen Teil der Beleuchtungsstärkeverteilung kennzeichnet dabei den groben Verlauf der Hell-Dunkel-Grenze (Bezugszeichen 1). Unterhalb der Hell-Dunkel-Grenze 1 steigt die Beleuchtungsstärke stark an, darüber fällt sie schnell ab. Diese Helligkeitsunterschiede erzeugen einen hohen Kontrast am Messschirm und später auf der Straße, wodurch besagte Hell-Dunkel-Grenze entsteht. Diese ist ebenfalls gesetzlich vorgeschrieben und soll durch ihren charakteristischen Verlauf die Fahrbahn direkt vor dem Fahrzeug und den Fahrbahnrand weiter ausleuchten und die Fahrbahnmitte in Richtung Gegenverkehr kürzer ausleuchten, um den Gegenverkehr nicht zu blenden.

1. Beispiel: Simulation von Nebel

Soll die Beleuchtungsstärkeverteilung unter Nebeleinfluss bewertet werden, muss Nebel künstlich erzeugt werden, was weder in der notwendigen Genauigkeit noch wiederholbar möglich ist. Alternativ kann der Nebel mittels Ray-Tracing-Verfahren für jeden einzelnen Lichtstrahl berechnet werden, was de facto mit praktikablem Aufwand nicht umsetzbar ist, oder die Streuung des ausgesendeten Lichtes und damit die Beleuchtungsstärkeverteilung in beliebig dichtem Nebel wird über die Analogie zur Diffusion von Medien quantitativ technisch bestimmt. Soll letzteres durchgeführt werden, kann das erste erfindungsgemäße Verfahren angewandt werden.

Dazu ist die Laufzeit des Lichtes bzw. die Entfernung zum Beobachterpunkt (hier 25m zum Messschirm) sowie die Nebeldichte als Variablen zu wählen. Als Eingangsgröße werden die zu streuenden Lichtstrahlen in Form des Lichtstärkeverteilungskörpers benötigt. Dieser kann virtuell oder durch fotogoniometrische Vermessungen realer Scheinwerfer erzeugt worden sein.

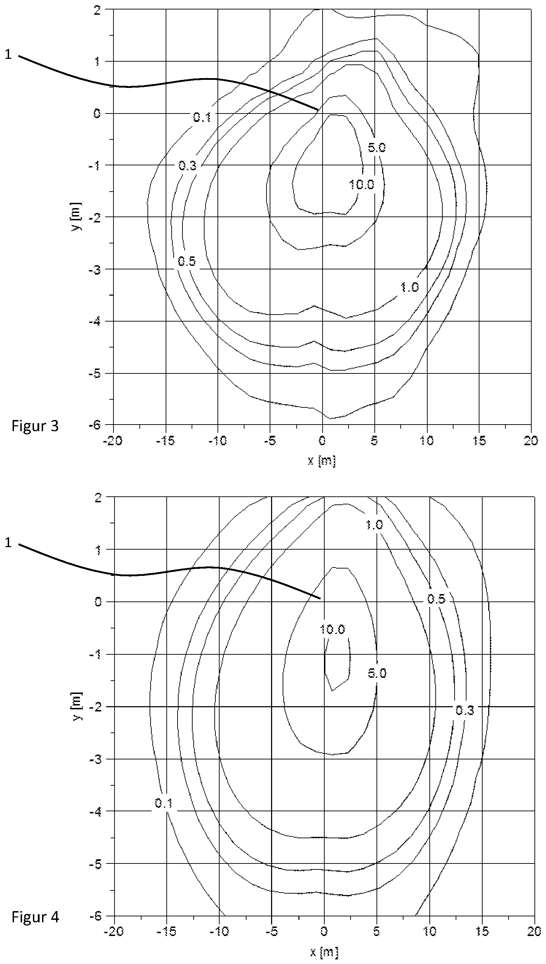

Dabei wird im vorliegenden Beispiel der Abstand bzw. die Entfernung zum Messschirm bei 25 m belassen. Die Figuren 2-4 zeigen die Beleuchtungsstärkeverteilung aus Figur 1 mit jeweils unterschiedlichen Nebeldichten, ausgedrückt mittels der Diffusionskonstante in der anzuwendenden Diffusionsgleichung, beginnend bei leichtem Nebel (Figur 2, a=113), über mäßigen Nebel (Figur 3, a=1803) bis zu sehr dichtem Nebel (Figur 4, a=18030). Bei extremem Nebel sinken die Sichtweiten bis auf 10m, was am 25m Messschirm bei der Leuchtkraft herkömmlicher Fahrzeugscheinwerfer kein verwertbares Ergebnis mehr produzieren würde.

In Figur 2 ist nun zu erkennen, dass sich die Hell-Dunkel-Grenze 1 beginnt aufzuweichen. In Figur 3 ist die Hell-Dunkel-Grenze nur noch zu erahnen und in Figur 4 ist sie vollständig zerstreut. Der Grund dafür ist die Streuung, die die Gebiete über und unter der 1-Lux-Linie verschwimmen lässt, wodurch die Helligkeits- bzw. Beleuchtungsstärkegradienten geringer werden und keine klare Grenze mehr erkennbar ist. Dies bedeutet aber auch, dass mehr Licht über der Hell-Dunkel-Grenze 1 abgestrahlt bzw. abgelenkt wird, als ursprünglich vorgesehen. Dadurch kann es zur Blendung des entgegenkommenden Verkehrs kommen. Durch die erfindungsgemäße Bewertung der Scheinwerfer kann nun der Strahlengang des Scheinwerfers derart angepasst werden, dass die Hell-Dunkel-Grenze 1 und die Fahrbahnausleuchtung ohne Nebel anforderungskonform bleibt und gleichzeitig die Blendung im Nebel herabgesetzt werden kann.

2. Beispiel: Bestimmung der Sichtweite

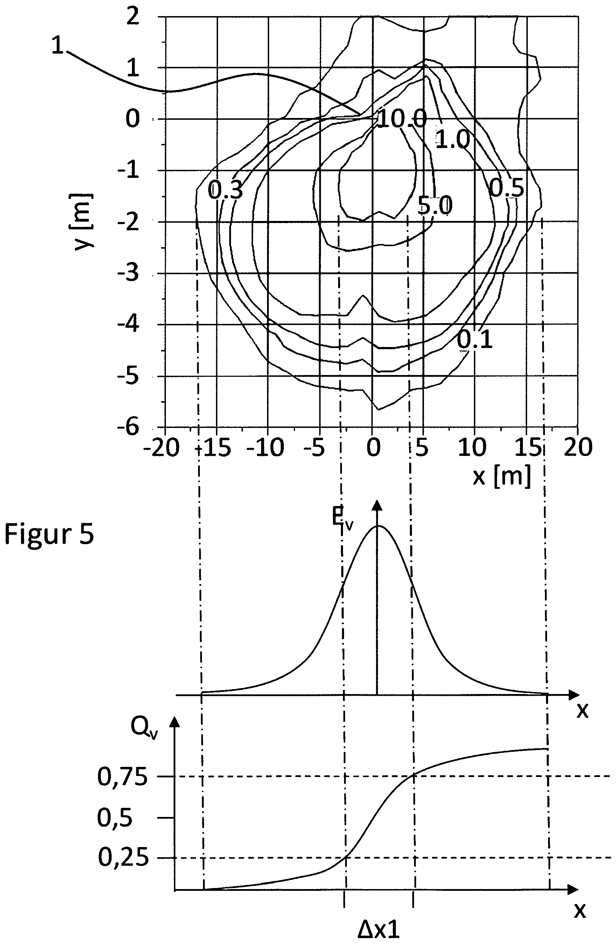

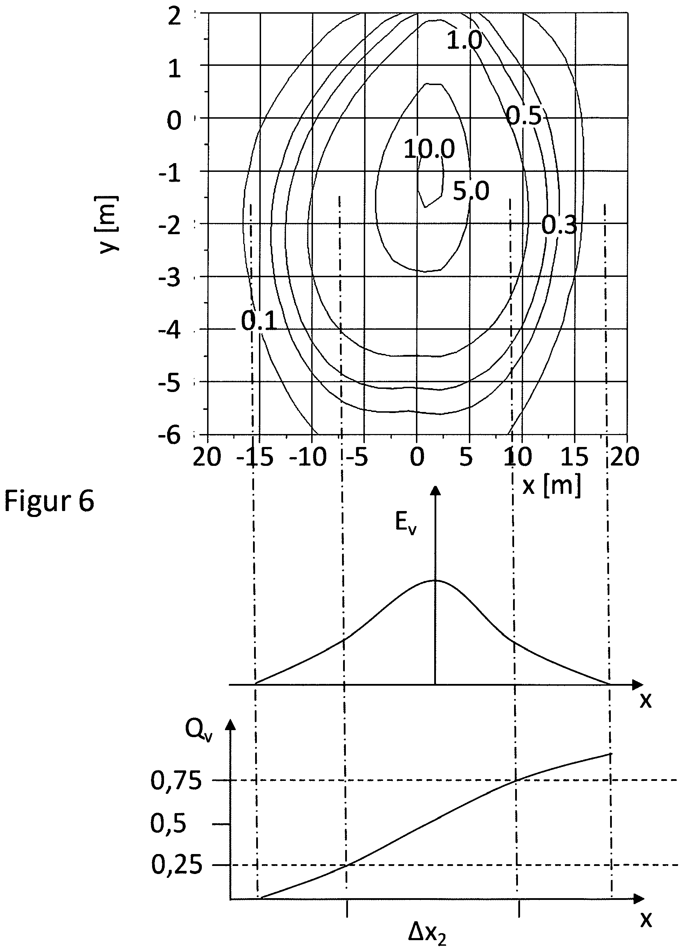

Das weitere erfindungsgemäße Verfahren betrifft die Bestimmung der Sichtweite unter Nutzung des erfindungsgemäßen Gedankens der Analogie zwischen der Lichtstreuung im Impulsraum und der Diffusion von Medien im Ortsraum. Dazu wird zunächst die Beleuchtungsstärke einer entfernten Lichtquelle, z. B. der Scheinwerfer eines entgegenkommenden Fahrzeugs, mittels einer Kamera erfasst. Diese stellt sich wie die oberen in den Figuren 5 und 6 gezeigten Beleuchtungsstärkeverteilungen dar. Die horizontale Achse in beiden Figuren 5 und 6 (x-Achse) ist die Abszissenachse des Kamera-Koordinatensystems.

Nun wird die empfangene Beleuchtungsstärke $E_v$ (jeweils mittleres Diagramm Figuren 5 und 6) zum Beispiel entlang des horizontalen Schnitts der Beleuchtungsstärkeverteilung durch die maximale Beleuchtungsstärke ermittelt. Die Beleuchtungsstärkeverteilung muss anhand willkürlich gewählter, senkrecht zur Abszisse verlaufender linker und rechter Grenzen eingegrenzt werden. Dies geschieht im vorliegenden Beispiel anhand der 0,1-Lux-Linie, verdeutlicht durch die beiden äußeren Strichpunktlinien in Figur 5 und 6. Praktischer Weise wird die Grenze in Abhängigkeit der Empfindlichkeit der Kamera oder der erfassten Beleuchtungsstärkeverteilung gewählt.

Aus der horizontalen Beleuchtungsstärkeverteilung entsprechend der mittleren Diagramme aus den Figuren 5 und 6 kann nun die empfangene Lichtmenge Qv als Integral der Beleuchtungsstärke $E_v$ gebildet werden (unteres Diagramm Fig. 5 und 6). Die Lichtmenge beträgt an der linken Grenze (jeweils äußere linke Strichpunktlinie in Fig. 5 und 6) definitionsgemäß 0 und an der rechten Grenze (jeweils äußere rechte Strichpunktlinie in Fig. 5 und 6) definitionsgemäß 1 bzw. 0% und 100%.

Als nächstes wird der Halbwertswinkel $\alpha_{Halbwert}$ bestimmt. Dazu werden die Grenzen ermittelt, die 50% der Lichtmenge einschließen. Diese 50% Qv liegen definitionsgemäß zwischen 0,25 $Q_v$ und 0,75 Qv. Die linke und rechte Grenze der 50% Lichtmenge, die in Figur 5 und Figur 6 jeweils durch die beiden inneren Strickpunktlinien dargestellt sind, begrenzen auf der Abszisse eine Strecke ($\Delta x_1$ in Fig. 5, $\Delta x_2$ in Fig.6). Anhand dieser Strecke und der Entfernung zur Lichtquelle, die über eine Stereokamera oder ein Radargerät bestimmt wird, kann der Halbwertswinkel $\alpha_{Halbwert}$ bestimmt werden. Alternativ kann der Halbwertswinkel $\alpha_{Halbwert}$ auch aus dem Verhältnis von $\Delta x$ und der Strecke zwischen 0 $Q_v$ und 1 $Q_v$ ($\Delta x_{ges}$), das über eine Zuordnungsvorschrift einem Winkel zugeordnet wird, bestimmt werden.

Schließlich wird mithilfe des Halbwertswinkels $\alpha_{Halbwert}$ und der Laufzeit t des Lichtes bzw. der Entfernung zur Lichtquelle die Diffusionskonstante bzw. die Nebeldichte und damit ein Maß für die Sichtweite ermittelt.

In Figur 5 und 6 ist eine Beleuchtungsstärkeverteilung ohne Nebel (Fig. 5) und bei sehr dichtem Nebel (Fig. 6) dargestellt. Die Beleuchtungsstärkeverteilungen im horizontalen Schnitt beider Varianten sind hier symmetrisch dargestellt, was nicht der Realität entsprechen muss. Außerdem sind die integrierten Lichtmengen $Q_v$ beide gleich groß, was als Annahme plausibel ist, weil die ausgesendete Lichtmenge in beiden Fällen identisch ist, allerdings bei Nebel mehr Licht durch Rückwärtsstreuung oder Absorption gedämpft werden kann. Zur prinzipiellen Veranschaulichung der erfinderischen Idee ist diese Schematisierung allerdings ausreichend und hat sich als realitätskonform erwiesen.

In Figur 5 ist die halbe Lichtmenge in einem eng begrenzten Bereich um die Ordinatenachse, also den Ursprung bzw. den Nullpunkt der Abszissenachse des Scheinwerferkoordinatensystems, angeordnet, weshalb der Halbwertswinkel $\alpha_{Halbwert}$ relativ gering ist. Daraus folgt auch eine relativ geringe Diffusionskonstante, was wiederrum einer hohen Sichtweite entspricht. In Figur 6 ist hingegen eine stark gestreute Beleuchtungsstärkeverteilung zu erkennen, die in einem flacheren Verlauf der Beleuchtungsstärke $E_v$ im Schnitt und einem nahezu linearen Verlauf der Lichtmenge Qv resultiert. Daraus folgt wieder ein relativ großer Halbwertswinkel $\alpha_{Halbwert}$ und eine entsprechend geringe Sichtweite.

Derart sind Sichtweiten z. B. im Straßenverkehr hochgenau zu bestimmen. Vorteilhafterweise kann dabei die Sichtweite auch für große Entfernungen, z. B. im Schiff- oder Flugverkehr, und auch für andere Anwendungen, z. B. stationäre Messungen, hochgenau bestimmt werden und ermöglicht darüber hinaus die Vergleichbarkeit der ermittelten Werte untereinander.

**Bezugszeichenliste**

1    Hell-Dunkel-Grenze auf 1-Lux-Linie

| | |
|---|---|
| $(\theta, \varphi)$ | Strahlungsrichtung Richtungswinkel/Raumwinkel |
| $(\theta_P, \varphi_P)$ | Beobachterrichtung |
| $\theta$ | vertikaler Winkel zwischen Strahlungsrichtung und Koordinatenachse |
| $\varphi$ | horizontaler Winkel zwischen Strahlungsrichtung und Koordinatenachse |
| I | Lichtstärke bzw. auf Raumrichtung bezogener Lichtstrom |
| k | Vektor eines Lichtstrahls |
| P | Beobachterpunkt |

| | |
|---|---|
| $\alpha_{Impuls}$ | Streuwinkel im Impulsraum |
| $\alpha_{Ort}$ | Streuwinkel im Ortsraum ($\alpha(\theta_P, \varphi_P, \theta, \varphi)$) |
| $I_E(\theta, \varphi, r_P)$ | entfernungsabhängige Lichtstärke |
| $I_{Impuls}(\alpha_{Impuls}, t)$ | streuungsabhängigen Lichtstärkeverteilung im Impulsraum |
| $I_{Ort}(\alpha_{Ort}, t)$ | streuungsabhängigen Lichtstärkeverteilung im Ortsraum |
| $\alpha_{Halbwert}$ | Halbwertswinkel der Helligkeitsverteilung des gestreuten Lichtes |
| a | Diffusionskonstante; quantitative Nebeldichte |
| $E_v$ | horizontale Beleuchtungsstärkeverteilung |
| $Q_v$ | integrierte Lichtmenge |
| $r_P$ | Abstand Beobachterpunkt zum Ursprung des Ortsbezugssystem |
| $d_P$ | identischer Abstand Beobachterpunkt zum Ursprung des Ortsbezugssystembei einer Vielzahl Beobachterpunkte |
| $v_P$ | unterschiedlicher Abstand Beobachterpunkt zum Ursprung des Ortsbezugssystembei einer Vielzahl Beobachterpunkte |
| $E(\theta_P, \varphi_P, r_P)$ | Beleuchtungsstärke im Beobachterpunkt |
| c | Lichtgeschwindigkeit |
| t | Zeit |
| $t_{Laufzeit}$ | Laufzeit des Lichts |

## Patentansprüche

1. Verfahren zur quantitativen Bestimmung von einer zeitlichen und räumlichen Verteilung von Lichtstrahlen in einem streuenden Medium aus der Abstrahlcharakteristik einer Lichtquelle, mit den Schritten:

    - Bestimmen einer Strahlungsrichtung ($\theta, \varphi$) und einer Lichtstärke $I(\theta, \varphi)$ eines der Lichtstrahlen und Definieren eines Strahlungsvektors k mit der Richtung ($\theta, \varphi$) und dem Betrag $I(\theta, \varphi)$,
    - Bestimmen einer streuungsabhängigen Lichtstärkeverteilung $I_{Impuls}(\alpha_{Impuls}, t)$ des Strahlungsvektors k in Abhängigkeit der Laufzeit des Lichtes und einer Nebeldichte im Impulsraum,
    - Transformieren der streuungsabhängigen Lichtstärkeverteilung im Impulsraum $I_{Impuls}(\alpha_{Impuls}, t)$ in eine streuungsabhängigen Lichtstärkeverteilung im Ortsraum $I_{Ort}(\alpha_{Ort}, t)$,
    - Bestimmen einer Beleuchtungsstärke $E(\theta_P, \varphi_P, r_P)$ eines Beobachterpunktes P im Ortsraum aus einer entfernungsabhängigen Lichtstärke $I_E(\theta, \varphi, r_P)$ und der streuungsabhängigen Lichtstärkeverteilung im Ortsraum $I_{Ort}(\alpha_{Ort}, t)$.

2. Verfahren nach Anspruch 1, wobei eine Beleuchtungsstärkeverteilung $E(\theta_P, \varphi_P, d_P)$ für eine Vielzahl von Beobachterpunkten P jeweils eines identischen Abstandes $d_P$ bestimmt und als zusammenhängende Verteilung anhand visueller Kriterien bewertet wird.

3. Verfahren nach Anspruch 1, wobei eine Vielzahl von Beleuchtungsstärken $E(\theta_P, \varphi_P, v_P)$ für wenigstens einen Beobachterpunkt P (oder ein begrenztes Umfeld um den Beobachterpunkt P) mit jeweils unterschiedlichen Abständen vp oder mit jeweils unterschiedlichen Beobachterwinkeln $d(\theta_P, \varphi_P, \theta, \varphi)$ und Abständen vp bestimmt und einzeln oder als Abfolge anhand visueller Kriterien bewertet werden.

4. Verfahren zur quantitativen Bestimmung der Sichtweite in einem homogenen, streuenden Medium mit den Schritten

    - Erfassen von Bilddaten wenigstens einer Lichtquelle aus der Umfeld mittels wenigstens eines Umfelderfassungsmittels,
    - Ermitteln der Laufzeit des Lichtes $t_{Laufzeit}$ der wenigstens einen Lichtquelle zwischen der Lichtquelle und dem wenigstens einen Umfelderfassungsmittel aus den Bilddaten des wenigstens einen Umfelderfassungsmittels und/oder aus Daten wenigstens eines weiteren Umfelderfassungsmittels,
    - Ermitteln des Halbwertswinkels $\alpha_{Halbwert}$ der Helligkeitsverteilung des gestreuten Lichtes der wenigstens einen Lichtquelle aus den Bilddaten des wenigstens einen Umfelderfassungsmittels und der Laufzeit des Lichtes der wenigstens einen Lichtquelle, wobei der Halbwertswinkel $\alpha_{Halbwert}$ der horizontale und/oder vertikale Raumwinkel ist, der, ausgehend von der Lichtquelle als Mittelpunkt, die erfasste Beleuchtungsstärke in einem definierten Verhältnis teilt,
    - Auswählen des dem Halbwertswinkel $\alpha_{Halbwert}$ entsprechenden definierten Verhältnisses der streuungsabhängigen Lichtstärkeverteilung im Impulsraum $I_{Impuls}$ zur Lichtmenge $I_0$,

- Ermitteln der Nebeldichte aus dem Halbwertswinkel $\alpha_{Halbwert}$ und der Laufzeit des Lichtes der wenigstens einen Lichtquelle und Ableiten der quantitativen Sichtweite.

**5.** Verfahren nach Anspruch 4, wobei der Halbwertswinkel $\alpha_{Halbwert}$ die erfasste Lichtstärke ungefähr im Verhältnis 1:1 teilt.


**Claims**

**1.** Method for quantitatively determining a temporal and spatial distribution of light beams in a scattering medium from the radiation pattern of a light source, comprising the steps of:

- determining a radiation direction $(\theta, \varphi)$ and a light intensity $I(\theta, \varphi)$ of one of the light beams and defining a radiation vector k with the direction $(\theta, \varphi)$ and the absolute value $I(\theta, \varphi)$,
- determining a scattering-dependent light intensity distribution $I_{momentum}(\alpha_{momentum}, t)$ of the radiation vector k in dependence on the time of flight of the light and a fog density in the momentum space,
- transforming the scattering-dependent light intensity distribution in the momentum space $I_{momentum}(\alpha_{momentum}, t)$ into a scattering-dependent light intensity distribution in the position space $I_{position}(\alpha_{position}, t)$,
- determining an illumination intensity $E(\theta_P, \varphi_P, r_P)$ of an observer point P in the position space from a distance-dependent light intensity $I_E(\theta, \varphi, r_P)$ and the scattering-dependent light intensity distribution in the position space $I_{position}(\alpha_{position}, t)$.

**2.** Method according to Claim 1, wherein an illumination intensity distribution $E(\theta_P, \varphi_P, d_P)$ is determined for a multiplicity of observer points P in each case of an identical distance $d_P$ and is assessed as related distribution on the basis of visual criteria.

**3.** Method according to Claim 1, wherein a multiplicity of illumination intensities $E(\theta_P, \varphi_P, v_P)$ are determined for at least one observer point P (or a delimited surrounding field around the observer point P) with in each case different distances $v_P$ or with in each case different observer angles $d(\theta_P, \varphi_P, \theta, \varphi)$ and distances vp and are assessed individually or as a sequence on the basis of visual criteria.

**4.** Method for quantitatively determining the visibility range in a homogeneous, scattering medium, comprising the steps of

- capturing image data of at least one light source from the surrounding field using at least one surrounding field capturing means,
- ascertaining the time of flight of the light $t_{TOF}$ of the at least one light source between the light source and the at least one surrounding field capturing means from the image data of the at least one surrounding field capturing means and/or from data of at least one further surrounding field capturing means,
- ascertaining the beam angle $\alpha_{beamangle}$ of the brightness distribution of the scattered light of the at least one light source from the image data of the at least one surrounding field capturing means and the time of flight of the light of the at least one light source, wherein the beam angle $\alpha_{beamangle}$ is the horizontal and/or vertical solid angle that, starting from the light source as the centre, divides the captured illumination intensity in a defined ratio,
- selecting the defined ratio, corresponding to the beam angle $\alpha_{beamangle}$, of the scattering-dependent light intensity distribution in the momentum space $I_{momentum}$ to the quantity of light $I_0$,
- ascertaining the fog density from the beam angle $\alpha_{beamangle}$ and the time of flight of the light of the at least one light source and deriving the quantitative visibility range.

**5.** Method according to Claim 4, wherein the beam angle $\alpha_{beamangle}$ divides the captured light intensity approximately with a ratio 1:1.


**Revendications**

**1.** Procédé de détermination quantitative d'une distribution temporelle et spatiale de faisceaux lumineux dans un milieu dispersif à partir de la caractéristique de rayonnement d'une source lumineuse, comprenant les étapes suivantes :

- la détermination d'une direction de rayonnement $(\theta, \varphi)$ et d'une intensité lumineuse $I(\theta, \varphi)$ d'un des faisceaux lumineux et la définition d'un vecteur de rayonnement k au moyen de la direction $(\theta, \varphi)$ et de la valeur $I(\theta, \varphi)$,

- la détermination d'une distribution d'intensité lumineuse $I_{impuls}(\alpha_{Impuls}, t)$ du vecteur de rayonnement k en fonction du temps de propagation de la lumière et d'une densité nébuleuse dans l'espace d'impulsion,
- la transformation de la distribution d'intensité lumineuse fonction de la dispersion dans l'espace d'impulsion $I_{impuls}(\alpha_{Impuls}, t)$ en une distribution d'intensité lumineuse fonction de la dispersion dans l'espace local $I_{Ort}(\alpha_{Ort}, t)$,
- la détermination d'une intensité d'éclairage $E(\theta_P, \varphi_P, r_P)$ d'un point d'observation P dans l'espace local à partir d'une intensité lumineuse $I_E(\theta, \varphi, r_P)$ fonction de la distance et de la distribution d'intensité lumineuse fonction de la dispersion dans l'espace local $I_{Ort}(\alpha_{Ort}, t)$ .

2. Procédé selon la revendication 1, dans lequel une distribution d'intensité d'éclairage $E(\theta_P, \varphi_P, d_P)$ est déterminée pour une pluralité de points d'observation P ayant chacun une distance $d_P$ identique et est évaluée selon des critères visuels sous la forme d'une distribution cohérente.

3. Procédé selon la revendication 1, dans lequel plusieurs intensités d'éclairage $E(\theta_P, \varphi_P, v_P)$ sont déterminées pour au moins un point d'observation P (ou un environnement limité autour du point d'observation P) ayant chacun des distances différentes $v_P$ ou ayant chacun des angles d'observation $d(\theta_P, \varphi_P, \theta, \varphi)$ différents et des distances $v_P$ différentes et sont évaluées séparément ou en séquence sur la base de critères visuels.

4. Procédé de détermination quantitative de la portée visuelle dans un milieu dispersif homogène comprenant les étapes suivantes :

- la détection de données d'image d'au moins une source lumineuse dans l'environnement au moyen d'au moins un moyen de détection d'environnement,
- la détermination du temps de propagation de la lumière $t_{Laufzeit}$ de ladite au moins une source lumineuse entre la source lumineuse et ledit au moins un moyen de détection d'environnement à partir des données d'image dudit au moins un moyen de détection d'environnement et/ou à partir de données d'au moins un autre moyen de détection d'environnement,
- la détermination de l'angle à mi-hauteur $\alpha_{Halbwert}$ de la distribution de luminosité de la lumière dispersée de ladite au moins une source lumineuse à partir des données d'image dudit au moins un moyen de détection d'environnement et du temps de propagation de la lumière de ladite au moins une source lumineuse, dans lequel l'angle à mi-hauteur $\alpha_{Halbwert}$ est l'angle solide horizontal et/ou vertical qui, à partir de la source lumineuse comme point central, divise l'intensité d'éclairage détectée selon un rapport défini,
- la sélection du rapport défini entre la distribution d'intensité lumineuse fonction de la dispersion correspondant à l'angle à mi-hauteur $\alpha_{Halbwert}$ dans l'espace d'impulsion $I_{impuls}$ et la quantité de lumière I0,
- la détermination de la densité de nébulosité à partir de l'angle à mi-hauteur $\alpha_{Halbwert}$ et du temps de propagation de la lumière de ladite au moins une source lumineuse et l'obtention de la portée visuelle quantitative.

5. Procédé selon la revendication 4, dans lequel l'angle à mi-hauteur $O_{Halbwert}$ divise l'intensité lumineuse détectée selon un rapport d'environ 1:1.

Figur 1

Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 68902877 T2
- DE 10303046 A1
- DE 6812334 U
- DE 3601386 C1
- DE 2004017884 B3